# EUROPÄISCHE PATENTSCHRIFT

(11) **EP 1 391 587 B1**
(45) Veröffentlichungstag und Bekanntmachung des Hinweises auf die Patenterteilung: **02.06.2010**
(21) Anmeldenummer: 02018633.4
(22) Anmeldetag: 20.08.2002
(51) Int. Cl.: F01D 25/16, F16C 39/06

(54) **Abgasturbolader**
Turbocharger
Turbocompresseur

(43) Veröffentlichungstag der Anmeldung: 25.02.2004
(73) Patentinhaber: BorgWarner, Inc., Auburn Hills, MI 48326-2872 (US)
(72) Erfinder: Jaisle, Jens-Wolf, 56190 Billiers (FR)
(74) Vertreter: Wolf, Eckhard

(56) Entgegenhaltungen:
- EP-A- 0 087 197
- DE-A- 1 526 439
- DE-A- 2 314 436
- US-A- 5 521 448
- PATENT ABSTRACTS OF JAPAN Bd. 1, Nr. 1, & JP 59 073624 A 25. April 1984 (1984-04-25)

## Beschreibung

Die Erfindung betrifft einen Abgasturbolader mit einem Gehäuse und einer im Gehäuse um ihre Längsachse drehbar angeordneten Welle, auf der ein Turbinenrad und ein Verdichterrad sitzen und die in Radiallagern und wenigstens einem Axiallager geführt ist, wobei die Radiallager als passive permanentmagnetische Lager ausgebildet sind, die jeweils eine auf der Welle sitzende Lagerscheibe als Rotor und wenigstens einen diesen an zumindest einer Seite axial gegenüberliegenden Stator aufweisen.

Abgasturbolader dienen der Verbesserung des Wirkungsgrades und damit der Leistungssteigerung von Verbrennungsmotoren. Sie weisen eine Welle auf, die einerends mit einem Turbinenrad und anderenends mit einem Verdichterrad versehen ist. Das Turbinenrad wird vom Abgasstrom des Verbrennungsmotors beaufschlagt, wobei im Wesentlichen ein Teil der thermischen Energie des Abgases durch das Turbinenrad in eine Drehbewegung umgesetzt wird. Über die Welle wird das Verdichterrad angetrieben, das Frischluft ansaugt und mit Überdruck in die Einlasskanäle des Verbrennungsmotors einströmen lässt und damit den Füllungsgrad verbessert.

An die Lagerung der Welle von Abgasturboladern werden hohe Anforderungen gestellt. Zum einen erreicht die Welle hohe Drehzahlen bis zu 300.000 U/min. Zum anderen sind der Abgasturbolader und damit dessen Lager hohen Temperaturen ausgesetzt. Ein weiteres Problem besteht darin, dass der auf das Turbinenrad auftreffende Abgasstrom starke Axialkräfte erzeugt, die in einem Axiallager aufgefangen werden müssen. Wegen der hohen Drehzahlen müssen die sich drehenden Teile des Abgasturboladers hochgenau ausgewuchtet werden, damit so wenig wie möglich Schwingungen bzw. Vibrationen erzeugt werden. Bei alledem muss zusätzlich noch darauf geachtet werden, dass der sehr breite Temperaturbereich, in dem ein Abgasturbolader arbeitet, nicht zu Verspannungen der Lager aufgrund von Materialausdehnungen führt.

Als Lager für die Welle kommen bisher ausschließlich Gleit- oder Wälzlager zur Anwendung. Sie unterliegen mit Blick auf die vorgenannten Beanspruchungen erheblichem Verschleiß und sind ebenso wie deren Schmierung zu ca. 80 % für den Ausfall des Abgasturboladers verantwortlich. Demgegenüber verspricht eine magnetische Lagerung der Welle den Vorteil, dass auf den Einsatz von Öl als Schmiermittel verzichtet werden kann. Dadurch lassen sich strenge Abgasnormen für Fahrzeuge einhalten und die Zuverlässigkeit der Tubolader erhöhen. Weiterhin bieten magnetische Lager den Vorteil der Reduzierung oder sogar Vermeidung des Wuchtens der rotierenden Komponenten, da diese Lager den Rotor in seiner Schwerpunktachse halten. In einem Punkt sind magnetische Lager den herkömmlichen ölgeschmierten Gleitlagern jedoch unterlegen - sie besitzen nahezu keine Dämpfung. Diese ist zwingend notwendig um Anregungen von außen, beispielsweise durch den Verbrennungsmotor, zu dämpfen und die Radialbewegung des Rotors auf das, durch die vorhandenen Radialspalte vorgegebene Spiel, zu begrenzen. Die Dämpfung muß durch zusätzliche konstruktive Maßnahmen bereitgestellt werden

Ein gedämpftes, passives Magnetlager ist aus der US-A-5 521 448 bekannt. Bei diesem Lager sollen die Steifigkeiten der magnetischen Radiallager und eines Dämpfungselements gleich groß sein. Die resultierende Gesamtsteifigkeit ist damit jedoch für ein Magnetlager eines Abgasturboladers zu gering.

JP-A- 59073624 beschreibt einen Abgasturbolader mit Magnetlagerung und bildet den nächstliegenden Stand der Technik.

Der Erfindung liegt daher die Aufgabe zugrunde, die Lagerung eines Abgasturboladers so zu gestalten, dass bei der Verwendung von permanentmagnetischen Radiallagern eine hinreichende Dämpfung auftretender Radialbewegungen des Rotors erreicht wird.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung wird vorgeschlagen, dass zwischen dem Stator und einer gehäusefesten Partie jeweils ein federelastisches Element zur radialen Dämpfung von Schwingungsbewegungen der Welle angeordnet ist, wobei die Radiallager eine Radialsteifigkeit von 160 kN/m aufweisen und das federelastische Element eine Federsteifigkeit zwischen 200 kN/m und 600 kN/m aufweist. Die federelastischen Elemente werden durch Radialbewegungen der Statoren auf Druck beansprucht und behindern auf diese Weise die Radialbewegungen der Welle und wirken dämpfend.

Die gehäusefesten Partien können durch Gehäusescheiben mit einem den Stator axial überragenden Flanschfortsatz gebildet sein, wobei das federelastische Element bevorzugt mit einer radial außen liegenden Fläche des Stators einerseits und einer radial innen liegenden Fläche der gehäusefesten Partie andererseits spaltfrei verbunden ist.

Der Stator ist vorzugsweise als den Rotor axial und radial einfassendes, im Querschnitt U-förmiges Joch ausgebildet und es können zwei Radiallager vorhanden sein, zwischen denen wenigstens ein Axiallager angeordnet ist. Dabei sollten die Radiallager innerhalb des Turboladers einen möglichst großen Abstand haben, um einen großen Hebelarm für eventuell auftretende Kippbewegungen der Welle zu haben. Eine positive Systemsteifigkeit, d.h. ein stabiles Radiallagersystem ergibt sich für Lagerabstände, welche größer sind als der mittlere Durchmesser der Lagerringe.

Das federelastische Element ist in bevorzugter Ausgestaltung der Erfindung als koaxial zur Welle angeordneter, zylindrischer Ring ausgebildet. Hierdurch wird eine gleichmäßige Dämpfungswirkung über den gesamten Umfang erreicht. Die im Betrieb des Turboladers auftretenden Schwingungen oder Vibrationen der rotierenden Teile hängen unter anderem von deren Masse und mechanischer Steifigkeit ab. Dies bedingt eine bestimmte Federsteifigkeit und Dämpfungskonstante des federelastischen Elements, die durch geeignete Wahl der Materialzusammensetzung des Elements bereitgestellt werden kann. Bevorzugt weist das federelastische Element eine Dämpfungskonstante zwischen 100 kg/s und 300 kg/s auf. Diese Werte können auf einfache Weise erreicht werden, indem das federelastische Element aus einem Kunststoff, bevorzugt aus Kautschuk besteht.

Im folgenden wird die Erfindung anhand eines in der Zeichnung schematisch dargestellten Ausführungsbeispiels näher erläutert. Es zeigen
- Fig. 1: die Seitenansicht eines Abgasturboladers ohne Gehäuse mit Teilschnittdarstellung des oberen Teils der Lagerung der Welle; und
- Fig. 2: einen Querschnitt durch ein Radiallager des Abgasturboladers gemäß Fig. 1.

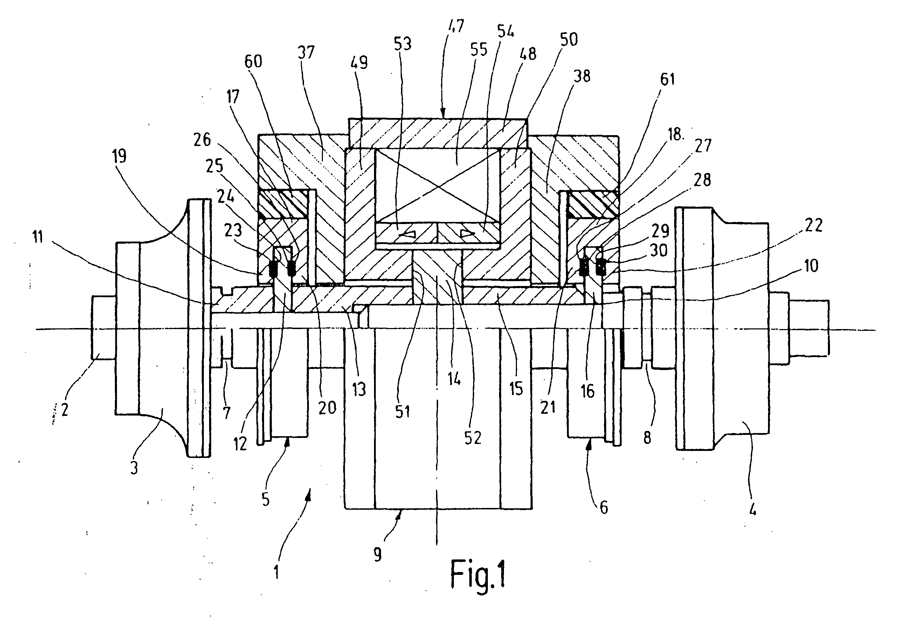

Der in Fig. 1 dargestellte Abgasturbolader 1 weist eine Welle 2 auf, an deren linksseitigem Ende ein Verdichterrad 3 und an deren rechtsseitigem Ende ein Turbinenrad 4 sitzen. Das Verdichterrad 3 ist in an sich bekannter Weise als Radialverdichter ausgebildet.

Zwischen Verdichterrad 3 und Turbinenrad 4 befinden sich zwei Radiallager 5, 6. Die Radiallager 5, 6 sind dem Verdichterrad 3 bzw. dem Turbinenrad 4 benachbart. Zwischen ihnen befinden sich Nuten 7, 8, die der Aufnahme von Dichtringen dienen, wobei sie Begrenzungslager mit einem typischen Spiel von ca. ± 0,15 mm bilden. Zwischen den Radiallagern 5, 6, befindet sich ein Axiallager 9.

Wie sich aus dem oberen Teil von Fig. 1 ersehen lässt, ist die Welle 2 von insgesamt sechs Ringen umgeben, die gegen einen Bund 10 an der Welle 2 axial verspannt sind. Auf eine erste Wellenhülse 11 mit der Nut 7 folgt eine Lagerscheibe 12, eine zweite Wellenhülse 13, eine Lagerscheibe 14, eine dritte Wellenhülse 15 und eine weitere Lagerscheibe 16.

Die Lagerscheiben 12, 16, gehören zu den Radiallagern 5, 6. Sie werden jeweils beidseitig durch ein im Querschnitt U-förmiges, die Welle 2 koaxial umgebendes Joch 17, 18 einfasst, wobei jedes Joch 17, 18 ein Paar von Radiallagerstatoren 19, 20 bzw. 21, 22 aufweist, die die Schenkel der Joche 17, 18, bilden. Die Radiallagerstatoren 19, 20, 21, 22 und die Lagerscheiben 12, 16 weisen Permanentmagnete 23, 24, 25, 26 bzw. 27, 28, 29, 30 auf, die sich in den beiden Radiallagern 5, 6 jeweils in axialer Richtung gegenüberstehen. Sie sind so polarisiert, dass sie sich jeweils anziehen, so dass sich in den Spalten zwischen den Lagerscheiben 12, 16 und den Radiallagerstatoren 19, 20, 21, 22 ein axial gerichtetes und attrahierendes Magnetfeld ergibt. Die Magnetfelder zentrieren die Welle 2, wobei eine Radialsteifigkeit von beispielsweise 160 kN/m erreicht wird.

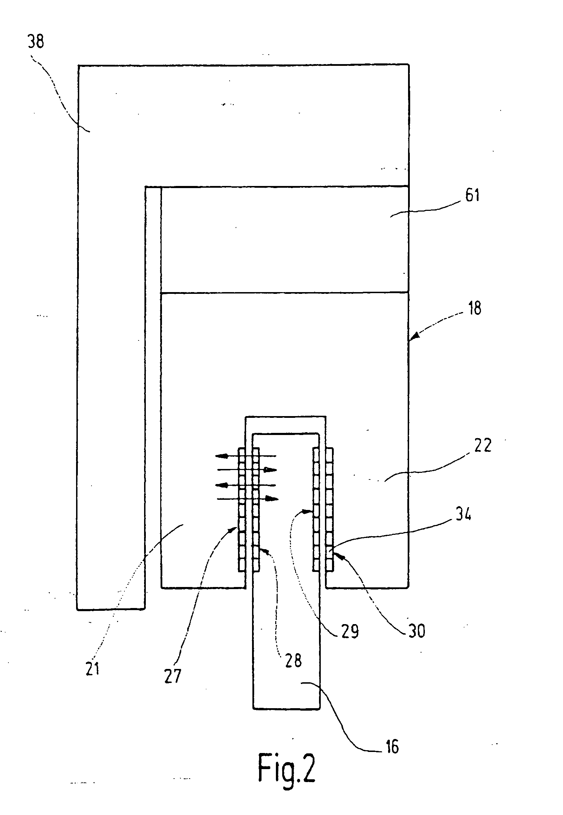

Die Permanentmagnete 23 bis 30 bestehen jeweils aus neun koaxial ineinander gesetzten Ringmagneten 34 wie aus der vergrößerter Darstellung des Radiallagers 6 in Fig. 2 zu ersehen ist. Die Ringmagnete 34 eines Permanentmagneten 23 bis 30 liegen in radialer Richtung spaltlos aneinander an. Zwei in radialer Richtung benachbarte Ringmangente 34 sind entgegengesetzt axial magnetisiert. Die in axialer Richtung gegenüberliegenden Ringmagnete 34 von zwei benachbarten Permanentmagneten 23 bis 30 sind sich gegenseitig anziehend polarisiert, so dass ein axialer Magnetfluss entsteht.

Die Joche 17, 18 werden radial außenseitig von federelastischen Elementen 60, 61 umgeben, die als zylindrische Ringe aus Kunststoffmaterial ausgebildet sind. Um auftretende Schwingungen möglichst wirksam dämpfen zu können, sind die Ringe 60, 61 spaltfrei mit der radial außen liegenden Fläche der Joche 17, 18 einerseits und der radial innen liegenden Fläche eines die Joche 17, 18 axial übergreifenden Flansches von Gehäusescheiben 37, 38 andererseits verbunden. Die Gehäusescheiben 37, 38 sind mit dem in der Zeichnung nicht näher dargestellten Gehäuse des Turboladers verbunden.

Die Ringe 60, 61 werden durch Radialbewegungen der Joche 17, 18 auf Druck beansprucht und dämpfen auf diese Weise die Radialbewegung. Die Federsteifigkeit der Ringe 60, 61 liegt im Bereich von 200 kN/m bis k600 N/m. Die Dämpfungskonstante der Ringe 60, 61 beträgt etwa 100 kg/s bis 300 kg/s.

Die Lagerscheibe 14 gehört zu dem Axiallager 9. Sie wird beidseitig von einem Ringjoch 47 aus geblechtem SI-Eisen eingefasst. Das Ringjoch 47 ist zwischen den beiden Gehäusescheiben 37, 38 eingefasst und fixiert. Es hat einen äußeren Jochmantel 48, von dem zwei nach innen gerichtete Jochschenkel 49, 50 ausgehen, die L-förmigen Querschnitt haben und mit gegeneinander gerichteten Schenkelabschnitten die Lagerscheibe 14 einfassen, wobei zwei Magnetspalte 51, 52 entstehen. Der Umfangsseite der Lagerscheibe 14 benachbart befinden sich innerhalb des Ringjochs 47 zwei axial nebeneinander liegende Permanentmagnete 53, 54, welche - symbolisiert durch die Dreiecke - entgegengesetzt axial polarisiert sind. Sie liegen aneinander und an den Jochschenkeln 49, 50 an. Sie werden von einer elektromagnetischen Ringspule 55 umgeben, die den Raum zwischen den Permanentmagneten 53, 54 sowie dem Jochmantel 48 und den Jochschenkeln 49, 50 ausfüllt.

Aufgrund der magnetischen Instabilität der Welle 2 in axialer Richtung muss über das Axiallager 9 eine axiale Stabilisierung bewirkt werden. Dies geschieht bei einer axialen Auslenkung der Lagerscheibe 14 dadurch, dass diese Auslenkung von einem hier nicht näher dargestellten, im Stand der Technik bekannten Sensor erfasst wird und hierdurch der ebenfalls nicht dargestellte Regler den Stromzufluss zu der Ringspule 55 so steuert, dass ein zusätzlicher Magnetfluss erzeugt wird, der insgesamt zu einer asymmetrischen Magnetflussverteilung innerhalb des Axiallagers 9 führt, die der Auslenkung der Lagerscheibe entgegenwirkt.

## Patentansprüche

1. Abgasturbolader (1) mit einem Gehäuse und einer im Gehäuse um ihre Längsachse drehbar angeordneten Welle (2), auf der ein Turbinenrad (4) und ein Verdichterrad (3) sitzen und die in Radiallagern (5, 6) und wenigstens einem Axiallager (9) geführt ist, wobei die Radiallager (5, 6) als passive permanentmagnetische Lager ausgebildet sind, die jeweils eine auf der Welle (2) sitzende Lagerscheibe (12, 16) als Rotor und wenigstens einen diesem an zumindest einer Seite axial gegenüberliegenden Stator (19, 20, 21, 22) aufweisen, **dadurch gekennzeichnet, dass** zwischen dem Stator (19, 20, 21, 22) und einer gehäusefesten Partie (37, 38) jeweils ein federelastisches Element (60, 61) zur radialen Dämpfung von Schwingungsbewegungen der Welle (2) angeordnet ist, wobei die Radiallager (5, 6) eine Radialsteifigkeit von 160 kN/m aufweisen und das federelastische Element (60, 61) eine Federsteifigkeit zwischen 200 kN/m und 600 kN/m aufweist,

2. Abgasturbolader nach Anspruch 1, **dadurch gekennzeichnet, dass** die gehäusefesten Partien durch Gehäusescheiben (37, 38) mit einem den Stator (19, 20, 21, 22) axial überragenden Flanschfortsatz gebildet sind.

3. Abgasturbolader nach Anspruch 1 oder 2, **dadurch gekennzeichnet, dass** das federelastische Element (60, 61) mit einer radial außen liegenden Fläche des Stators (19, 20, 21, 22) einerseits und einer radial innen liegenden Fläche der gehäusefesten Partie andererseits spaltfrei verbunden ist.

4. Abgasturbolader nach einem der Ansprüche 1 bis 3, **dadurch gekennzeichnet, dass** das federelastische Element (60, 61) als koaxial zur Welle (2) angeordneter, zylindrischer Ring ausgebildet ist.

5. Abgasturbolader nach einem der Ansprüche 1 bis 4, **dadurch gekennzeichnet, dass** das federelastische Element (60, 61) eine Dämpfungskonstante zwischen 100 kg/s und 300 kg/s aufweist.

6. Abgasturbolader nach einem der Ansprüche 1 bis 5, **dadurch gekennzeichnet, dass** das federelastische Element (60, 61) aus einem Kunststoff, vorzugsweise aus Kautschuk besteht.

7. Abgasturbolader nach einem der Ansprüche 1 bis 6, **dadurch gekennzeichnet, dass** der Stator (19, 20, 21, 22) als den Rotor axial und radial einfassendes, im Querschnitt U-förmiges Joch (17,18) ausgebildet ist.

8. Abgasturbolader nach einem der Ansprüche 1 bis 7, **dadurch gekennzeichnet, dass** zwei Radiallager (5, 6) vorhanden sind, zwischen denen wenigstens ein Axiallager (9) angeordnet ist.

## Claims

1. Exhaust gas turbocharger (1) having a housing and having a shaft (2) which is arranged so as to be capable of rotating about its longitudinal axis in the housing and on which a turbine wheel (4) and a compressor wheel (3) are seated and which is guided in radial bearings (5, 6) and in at least one axial bearing (9), the radial bearings (5, 6) being embodied as passive permanent-magnetic bearings which each have a bearing plate (12, 16) which is seated, as a rotor, on the shaft (2), and at least one stator (19, 20, 21, 22) which lies axially opposite said rotor on at least one side, **characterized in that** a spring-elastic element (60, 61) is arranged in each case between the stator (19, 20, 21, 22) and a part (37, 38) which is fixed to the housing in order to radially damp oscillation movements of the shaft (2), the radial bearing (5, 6) having a radial stiffness of 160 kN/m and the spring-elastic element (60, 61) having a spring stiffness between 200 kN/m and 600 kN/m.

2. Exhaust gas turbocharger according to Claim 1, **characterized in that** the parts which are fixed to the housing are formed by housing plates (37, 38) with a flange projection which projects axially beyond the stator (19, 20, 21, 22).

3. Exhaust gas turbocharger according to Claim 1 or 2, **characterized in that** the spring-elastic element (60, 61) is connected without a gap to a radially outwardly lying surface of the stator (19, 20, 21, 22) at one end, and to a radially inwardly lying surface of the part which is fixed to the housing at the other.

4. Exhaust gas turbocharger according to one of Claims 1 to 3, **characterized in that** the spring-elastic element (60, 61) is embodied as a cylindrical ring which is arranged coaxially with respect to the shaft (2).

5. Exhaust gas turbocharger according to one of Claims 1 to 4, **characterized in that** the spring-elastic element (60, 61) has a damping constant between 100 kg/s and 300 kg/s.

6. Exhaust gas turbocharger according to one of Claims 1 to 5, **characterized in that** the spring-elastic element (60, 61) is composed of a plastic, preferably of rubber.

7. Exhaust gas turbocharger according to one of Claims 1 to 6, **characterized in that** the stator (19, 20, 21, 22) is embodied as a yoke (17, 18) which is U-shaped in cross section and surrounds the rotor axially and radially.

8. Exhaust gas turbocharger according to one of Claims 1 to 7, **characterized in that** there are two radial bearings (5, 6) between which at least one axial bearing (9) is arranged.

## Revendications

1. Turbocompresseur à gaz d'échappement (1) comprenant un boîtier et un arbre (2) disposé à rotation dans le boîtier autour de son axe longitudinal, sur lequel reposent une roue de turbine (4) et une roue de compresseur (3), et qui est guidé dans des paliers radiaux (5, 6) et au moins un palier axial (9), les paliers radiaux (5, 6) étant réalisés sous forme de paliers magnétiques permanents passifs, qui présentent à chaque fois un disque de palier (12, 16) reposant sur l'arbre (2) en tant que rotor et au moins un stator (19, 20, 21, 22) axialement opposé à celui-ci sur au moins un côté, **caractérisé en ce qu'**entre le stator (19, 20, 21, 22) et une partie (37, 38) fixée au boîtier, est disposé à chaque fois un élément élastique à ressort (60, 61) pour l'amortissement radial des mouvements d'oscillation de l'arbre (2), les paliers radiaux (5, 6) présentant une rigidité radiale de 160 kN/m et l'élément élastique à ressort (60, 61) présentant une rigidité de ressort comprise entre 200 kN/m et 600 kN/m.

2. Turbocompresseur à gaz d'échappement selon la revendication 1, **caractérisé en ce que** les parties fixées au boîtier sont formées par des disques de boîtier (37, 38) avec une saillie formant bride dépassant axialement au-delà du stator (19, 20, 21, 22).

3. Turbocompresseur à gaz d'échappement selon la revendication 1 ou 2, **caractérisé en ce que** l'élément élastique à ressort (60, 61) est connecté sans fente d'une part à une surface du stator (19, 20, 21, 22) disposée radialement à l'extérieur, et d'autre part à une surface de la partie fixée au boîtier disposée radialement à l'intérieur.

4. Turbocompresseur à gaz d'échappement selon l'une quelconque des revendications 1 à 3, **caractérisé en ce que** l'élément élastique à ressort (60, 61) est réalisé sous forme de bague cylindrique disposée coaxialement par rapport à l'arbre (2).

5. Turbocompresseur à gaz d'échappement selon l'une quelconque des revendications 1 à 4, **caractérisé en ce que** l'élément élastique à ressort (60, 61) présente une constante d'amortissement entre 100 kg/s et 300 kg/s.

6. Turbocompresseur à gaz d'échappement selon l'une quelconque des revendications 1 à 5, **caractérisé en ce que** l'élément élastique à ressort (60, 61) se compose d'un plastique, de préférence de caoutchouc.

7. Turbocompresseur à gaz d'échappement selon l'une quelconque des revendications 1 à 6, **caractérisé en ce que** le stator (19, 20, 21, 22) est réalisé sous forme d'armature (17, 18) de section transversale en forme de U entourant axialement et radialement le rotor.

8. Turbocompresseur à gaz d'échappement selon l'une quelconque des revendications 1 à 7, **caractérisé en ce qu'**il est prévu deux paliers radiaux (5, 6) entre lesquels est disposé au moins un palier axial (9).
